# EUROPEAN PATENT APPLICATION

(11) **EP 0 765 049 A2**
(43) Date of publication of application: **26.03.1997**
(21) Application number: 96660051.2
(22) Date of filing: 16.08.1996
(51) Int. Cl.: H04J 3/14, H04L 1/00

(54) **A method for testing the operation of a network element in a transmission network**

(30) Priority: 22.09.1995 FI 954517
(71) Applicant: Martis Oy, 02630 Espoo (FI)
(72) Inventor: Laiholuoto, Kari, 02760 Espoo (FI); Salonen, Kaija, 02360 Espoo (FI)
(74) Representative: Nordin, Leif

(57) **Abstract**

The invention relates to a method for testing the operation of a network element (1) in the SDH network, and to a network element (1) applying said method. A certain first section (4) of the network element adds verification data to a certain free position in the transmit information, whereby the verification data comprises the number (PVB, E_CNT) of parity errors detected in the transmit information and a certain test part (TB; PILOT1; PILOT2). A second section (6) of the network element reads the number of parity errors and calculates whether it corresponds to the reality, or whether there occurred more errors within the network element (1). The test part (TB; PILOT1; PILOT2) is read to examine whether the transmission path (5a, 5b) within the network element operates correctly. On the basis of the test the microprocessor (8) controlling the operation of the network element decides about the use of redundant units (5a, 5b).

## Description

The invention generally relates to the testing and diagnostics of transmission equipment, and particularly to the testing of a network element operating in a transmission network realized by means of the synchronous digital hierarchy (SDH) in order to determine whether its components operate correctly. Here a network element particularly refers to a network element defined in the ITU specifications (International Telecommunication Union) which can be e.g. a terminal multiplexer, a digital cross-connect switch, a so called Add/Drop multiplexer or a regenerator.

In order to standardize and improve digital transmission on land-lines the so called synchronous digital hierarchy was developed and intended to succeed the present so called plesiochronic system, whereby the synchronous digital hierarchy as a concept means firstly that in principle all nodes of a digital transmission network are synchronized with the same clock and secondly that the transmit information is arranged into frames defined on several levels according to the hierarchic order. The ITU recommendations G.703, G.70X (Draft) and G.781 - G.784 contain the essential definitions regarding the functions of this arrangement. The frames of the transmit information are called STM-N frames, where STM is short for the words Synchronous Transport Module and N refers the number of the hierarchy level, so that the lower the level the lower the number. On the lowest hierarchic level the frames are STM-1 frames, and they are used to pack the information for instance in the present PCM systems (Pulse Code Modulation) of 2 Mbit/s, 8 Mbit/s and 34 Mbit/s. The transmission rate on the higher hierarchic levels are multiples of the rate on this lowest level, so that the number N in the name of the frame indicates the multiple of the transmission rate compared to the base rate.

From a received frame it must be possible to sort out where the actual transmit information or the payload begins. Therefore the frame contains a pointer, which is a number and defines the payload phase within the frame. The pointer points to that byte in the STM-N frame where the payload begins. Information not belonging to the payload comprises pointers and overhead, which is used to control the data transmission, to define the contents of the frame, and to detect and correct errors. The term payload as such does not relate to any particular data structure, but it is used as a general term for information with contents not relevant for controlling the data transmission.

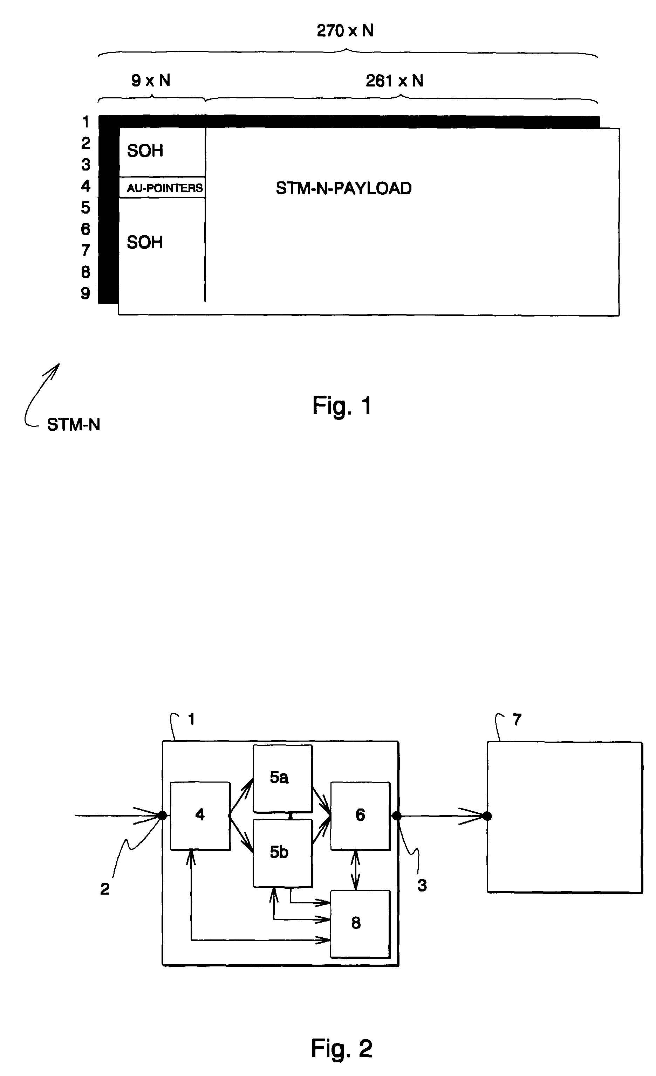

Figure 1 illustrates the STM-N frame structure. It can be described with a matrix having 9 rows and 270xN columns. The matrix elements are bytes, so that one frame contains 2430xN bytes. The first 9xN columns of the matrix comprise overhead and pointer information, so that the rows 1 to 3 and 5 to 9 of these columns belong to the so called section overhead (SOH) and the row 4 comprises pointers for the so called administrative units (AU). The last 261xN columns of the matrix comprise the actual transmit information, in other words they form the payload. In the transmission the STM-N frames appear in succession at intervals of 125 µs. If the STM-N frame according to figure 1 is transmitted on a serial mode transmission link, then for transmission the bytes contained in it are in the figure read from the left to the right and from top to bottom. The most significant bit (MSB) of each byte is transmitted first and the least significant bit (LSB) is transmitted last.

Between the transmitting device and the receiving device the information transmitted in the SDH network passes through certain transmission equipment or nodes. The whole transmission route from the device assembling the frame to the device disassembling the frame is called a path, the definition being tied to the frame hierarchy so that if the information is packed into STM-4 frames on only a part of the transmission path this part is called an STM-4 level path. An STM-1 level path covers the whole transmission path utilizing the synchronous digital hierarchy from the transmitting device to the receiving device. The section of the transmission path between two transmission devices, which are able to perform multiplexing, is called a multiplexer section (MS), and a section of a of the transmission path between such devices, which only regenerate (amplify) the signal without changing its multiplexing, is called a regenerator section (RS).

The information structure part which is transmitted between the devices and used for to adapt path and voltage levels is called the administrative unit (AU). It comprises the payload or a virtual container (VC) and an AU pointer indicating the phase difference between said payload and the STM-N frame. The AU pointer has a predetermined position in the STM-N frame (ref. figure 1). One ore more administrative units (AU) with a fixed position in the STM-N payload form an administrative unit group (AUG).

The above mentioned virtual container or the VC frame is a component used in multiplexing to support connections on the path level. A certain VC frame is transmitted intact from the beginning to the end of the respective path, in other words its contents do not change between the transmitting device and the receiving device of the path. It comprises the payload and the path overhead (POH).

A tributary unit (TU) forms the connection between a lower and a higher hierarchy level. It comprises the payload or the VC frame and a pointer indicating the position of the payload in the TU frame. The administrative unit (AU) differs from the tributary unit (TU) in that the AU is an assembly, which can be cross-connected in the network and which thus can be transferred between different STM-1 signals, but the TU is an internal unit of a certain frame which can not be transferred between different STM-1 signals without an administrative unit of a higher level. One or more tributary units (TU) having a fixed position in a higher level VC frame form a tributary unit grout (TUG), which is formed by multiplexing the TU's. A group can comprise tributary units of different sizes.

A container (C) is the synchronized payload part of each VC. It comprises a payload signal having a frequency which can be justified, if required, so that it is synchronized with the corresponding STM-1 signal. In the future the container can also be a broadband signal.

The containers (C), the virtual containers (VC) and the tributary units (TU) can be formed on the basis of different basic channel rates. The basic channel rate 1.5 Mbit/s is used in USA, Canada and Japan, and the rate 2 Mbit/s elsewhere. This is expressed in the names of said data structures so that the letter symbol is followed by two digits, of which the first refers to the hierarchy level and the second, which can be 1 (= 1.5 Mbit/s) or 2 (= 2 Mbit/s), refers to the basic channel rate. For instance, the indication TU-12 means a tributary unit of the first hierarchy level formed from a signal transmitted at the basic channel rate 2 Mbit/s.

Devices taking part in the communication or the so called network elements in the SDH network are i.a. the terminal multiplexer, the digital cross-connect switch, the so called Add/Drop multiplexer and the regenerator, which represent a technology known per se by a person skilled in the art. In order to realize the data transmission the STM-N frames are assembled and disassembled in a multiplexer device by using different hierarchy levels. Cross-connect switches make the connections between different input and output ports, i.e. they change the multiplexed component order and structure of the signals directed to the different output ports. A regenerator does not affect the contents of the signal, but compensates for losses and other deterioration effects occurring on the transmission paths by amplifying the signal and by removing interference.

The network elements consist of electronic components, which can present errors and functional troubles due to material, assembly or environmental conditions. The primary goal is generally that the transmit information is correctly transferred from the input port to the output port of the network element. If the information is corrupted the first aim is to detect the errors and in some degree also to correct them, so that the information is transmitted in a satisfactory way disregarding the errors. Another aim must be that the operator responsible for the network condition and the communications can, when required, localize the network point causing disturbances, so that the corresponding device or component can be repaired or replaced.

Figure 2 shows schematically an SDH network element 1 comprising an input port 2 and an output port 3. The network element 1 comprises an input section 4, where the input signal is received and processed so that it can be e.g. cross-connected in the substantially identical switch blocks 5a and/or 5b connected in parallel in the network element. The use of two identical switch blocks represents a so called redundancy, whereby the signal can be directed through the secondary switch block if the switch block in primary use is impaired. Further the network element comprises an output section 6, in which the signal is processed for the transmission to the next network element 7 and then transmitted. The schematic figure 2 is presented as an example which does not limit the disclosure below. The description of the invention presented below can also be applied in connection with other network elements, of which are mentioned as examples elements comprising several input and output ports, or an embodiment comprising several parallel and consecutive blocks instead of the simple parallel blocks 5a and 5b. The figure shows schematically also the microprocessor 8, which controls the operation of the network element.

Certain functions have been defined on each hierarchy level of the SDH system in order to detect errors occurring in the transmit information. When the data is transmitted e.g. as STM-N frames over multiplexer sections, then for each frame a bit interleaved parity (BIP) verification is calculated with the aid of a polynome of the order 24xN, whereby the verification is a certain binary number. This procedure represents a certain special case of the application of CRC codes (Cyclic Redundancy Check), and according to the order of the polynome used in this procedure it is called the BIP-24N procedure. The check sum calculated from the frame is added to the overhead part, whereby the previous verification is included in the bits protected by the code when the BIP verification is calculated for the current frame. A BIP-8 procedure is used for the transmission over a regenerator section, whereby a polynome of the 8th order is used when the parity checksum is calculated. Correspondingly, the virtual containers are protected so that the protection of VC-4 and VC-3 containers uses the BIP-8 procedure and the VC-2, VC-12 and VC-11 containers are protected with a BIP-2 procedure.

The above described arrangement for detecting transmission errors is not as such suitable for the examination of the operation of a certain network element, because even if the parity information (the BIP check sums) were examined in the output section 6 of a network element according to figure 2, any found errors do not indicate whether they were generated in the switch block 5a or 5b used in the network element, or in a previous transmission device on the same path. The signal can be directed through both switch blocks 5a, 5b and statistics can be compiled about occurred errors on a long term basis, which would provide an indication which switch block 5a, 5b operates better, but this takes time and as a method it is not quite reliable due to its statistical nature.

From the Finnish patent publication FI 925481 a procedure is known in which a test byte is added to the transmit information in the input section of the network element, whereby the transmission of the test byte is the basis for the examination of the network element's operation. When a test byte has propagated through the network element together with the transmit information it is detected in the output section of the network element and compared with the original byte in order to find out whether the byte contents have changed. The publication proposes that the test byte can be placed within the transmit information in any position where there is empty space, e.g. due to the removal of section and path overheads. Further it proposes that the test byte conforms to a certain predetermined bit pattern, which also can alternate, for example as the sequence 11111111 - 10101010 - 01010101-00000000, in order to detect reflection and jamming errors.

The use of an independent byte for testing purposes has a disadvantage in that this procedure covers only that interval during which said byte travels through the network element. Because a frame comprises several thousand bytes, it is difficult with one byte to detect a fault causing an error, for instance in every 20th or in every 100th byte, on the average. Also, the use of the test byte discloses errors only in that specific signal path along which said byte passed through the network element. Further, the allocation of a whole byte for testing purposes is an inflexible method.

From the patent publication WO 94/17614 a method is known which also uses a whole byte to test the operation of network element parts. In this case the byte can be divided into fields, which contain location data of circuit boards processing the transmit information, and a parity bit calculated on the basis of the transmit information, whereby the bit is set to zero or one, depending on which produces an even total parity of the transmitted frame or multiframe. In the case of TU-3/AU-4 frames the test byte is placed in the area of the section overhead and in the case of lower hierarchy level TU1/2 frames in the V4 byte of the corresponding path overhead. In addition to the use of a whole byte this method has a disadvantage in that certain bits of the test byte are fixed zeroes, so it is difficult to detect a jamming error in the path of these bits. Further, with the use of a single parity bit only such error conditions are detected where there is an odd number of bit errors within the network element. The location of the test byte in the SOH area requires that the corresponding part of the section overhead and particularly the test byte related to the VC frame must be connected in the network element via the same path and in the same phase as the actual VC frame. The actual SOH bytes received from the line can not be transported within the device, and the internal transmission paths can not be serial STM-1 paths, because according to the publication the test byte is placed over the so called frame alignment bytes or over other SOH bytes. Thus the method presented in the publication can restrict the internal realization of the network element.

The object of the present invention is to present a method with which it is possible to have a thorough and reliable examination of the operation of a network element in a digital transmission network. An object of the invention is also to present a method with which it is possible to make a rapid and reliable decision to take into use a substitute functional block in the network element when the original got a fault. An object of the invention is further to present a method with which a faulty network element or part of it can be rapidly and reliably located for corrective actions. An object of the invention is further to present a transmission network element in which the method of the present invention is applied.

The objects of the invention are attained by an arrangement, in which a test signal is added to the transmit information in a certain first section of the network element, whereby the test signal at least in part is formed on the basis of the contents of a certain information part, and in certain second section of the network element the contents of said test signal are examined in order to find out whether errors have been introduced in the transmit information within the network element.

The method according to the invention is characterized in that verification data is added to the transmit information in a certain first section of the network element, whereby the verification data at least in part is formed on the basis of the contents the transmit information frames, and said verification data is read in a certain second section of the network element in order to find out whether the components in the network element between said first part and said second part operates correctly.

An object of the invention is also a device to realize the method according to the invention. The device according to the invention comprising a first section, a second section and means to transmit information between them is characterized in that said first section comprises information generating means to generate verification data on the basis of the contents of the transmit information which it received, and adding means to add said verification data to the transmit information, and that said second section comprises interpreting means to interpret said verification data in order to find out whether said means to transmit information between said first and second sections operate correctly.

Above there was a presentation of such calculation and encoding procedures which belong to the basic functions of the SDH transmission system defined in the above mentioned ITU recommendations. According to the invention an effective procedure to monitor transmission errors in a network element is obtained so that firstly information about parity errors observed in the actual signal to be transmitted is added to the signal in a certain section of the network element, preferably in its input section. Thus the parity of each frame is calculated in this section of the network element, and the parities are compared with those "original" parity bits which were added to the actual information when the frames were formed. As a result of the comparison there is obtained the number of parity errors observed for each frame, and this number is added as a binary number to a certain one of those free positions, which are contained in the transmit information. In a certain second section of the network element, preferably in the output section, the parity is recalculated for each frame and the parities are compared with the original parity bits. As a result of this comparison we obtain for each frame the observed number of parity errors in the information, which has passed through the examined network element. When this result is compared with the number of parity errors calculated in the input section we obtain as a result the number of parity errors occurring within the network element. The number of parity errors calculated in the input section can be read by the output section, because in the way described above it was added in a certain free position of the transmit information.

In addition to the test signal representing the number of parity errors, an advantageous embodiment of the present invention cares for that test bits are added to a second certain free position in the transmit information, so that the passage of the test bits through the network element provides an idea of the general operation of the transmission path and so that they also can act as a synchronization signal providing a correct reading of the information about the number of parity errors. As test bits it is possible to use bits changing in accordance with a certain sequence, and the position of the test bits in the frame can be changed so that they can provide a broad idea of the operation of the blocks taking part in the transmission of the information. It is also possible to exchange the positions of the test bits and the bits representing the number of observed errors in different frames, and the bits can be inverted (zeros into ones and vice versa) in accordance with a certain predetermined time schedule, which makes the testing more versatile.

Below the invention is described in more detail with reference to preferred embodiments shown as examples and to the enclosed figures, in which

Figure 1 shows the known structure of an STM-N frame.

Figure 2 shows schematically the known structure of a network element.

Figure 3 shows the mutual location of test bits and bits representing parity errors in a preferred embodiment of the invention.

Figure 4 shows the mutual location of test bits and bits representing parity errors in another preferred embodiment of the invention.

Figure 5 shows as a block diagram a network element according to the invention.

The same reference numerals are used for corresponding parts in the figures.

In prior art it is known that when a signal to be transmitted in the SDH system arrives at a certain network element, for instance an AU-4 cross-connect switch, the STM-N frames are partly disassembled so that a certain information part is removed from them; in the case of the cross-connect switch the section overhead and the path overhead are removed from an STM-1 frame. However, the signal frequency does not change, so that instead of the removed information part other information can be added in the so called free positions. The overhead parts of the frames also contain certain so called growth bytes and reserved bytes, for which there is not yet defined any particular use, so that in their place other information can be added in order to apply the method according to the invention.

In prior art it is further known that a signal contains certain parity information for each frame; for instance a parity verification is calculated for the VC-4 frame according to the BIP-8 procedure and this verification is placed in the overhead of the next VC-4 frame. According to the invention a certain number of bits in a certain place of the free position is reserved and used to indicate the number of observed parity errors. When the signal arrives at a certain network element 1 its input section 4 calculates the parity of for instance a VC-4 frame with the aid of the same polynome of the 8th order with which the "originar" parity was calculated. Comparison of the obtained parity result with the original parity information obtained in the signal provides the number of parity errors for each frame before the processing of the frame in said network element.

In all information structures having a frame format and being used for information communication in the SDH system the locations of bytes, or the byte positions, have names comprising letter and number identifications. A preferred embodiment of the invention uses byte positions with the identification H3 1 in the AU-4 frames, H3 in the TU-3 frames, and V3 in the TU-2/TU-12 frames, to place both the information concerning the number of parity errors and the test bits. The number of bits used for these two purposes may vary. The use of said byte positions has a particular advantage in that no regular channel for logical information communication can be connected to them, because according to the recommendations they may be used for the so called negative justification, which will be discussed in more detail below. The invention does not require the byte positions to have a regular assignment, in other words an assignment in each frame, to be used according to the invention, but the negative justification may be performed according to the recommendations. Said byte positions are used according to the invention in those frames where no negative justification is done. Thus the invention does not limit any later addition of regular logical information communication channels.

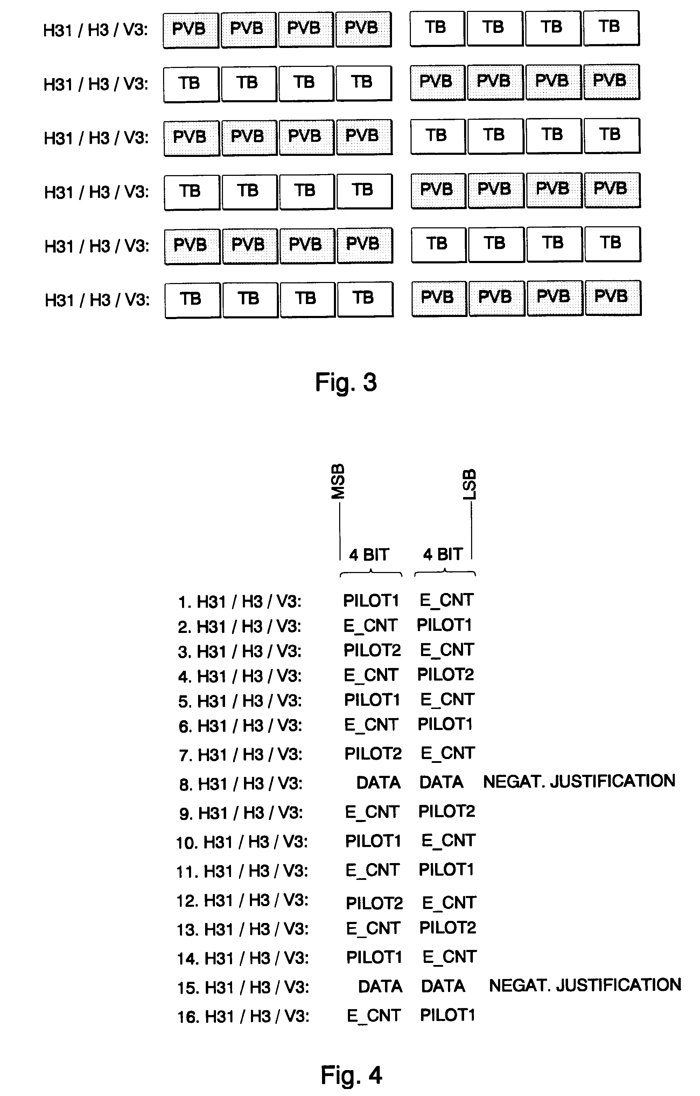

Figure 3 shows an embodiment where the parity error information is encoded into four bits PVB, and the number of test bits TB is also four. These two groups of four bits each are located consequentially, so that in total they occupy one byte. Because four bits can represent the numbers 0 to 15 in the decimal system this arrangement can basically indicate a maximum of 15 observed parity errors. Four bits can indicate at most 8 parity error states, because in the preferred embodiment of the invention the BIP procedure known per se is used for the encoding of the number of errors, whereby the i:th bit of each multi-bit parity verification represents the parity of each i:th bit group of the parity encoded information.

Figure 3 shows the parity error bits and test bits PVB, TB regarding consecutive VC frames, so that eight bits on the top row represent a certain VC frame, the eight bits on the next row represent the next VC frame, and so on. It is advantageous to exchange the mutual order of the test bits TB and the parity error bits PVB regularly, because in several points in a typical network element the transmit information is processed in parallel mode on a bus with the width of eight bits, and because one object with the use of the test bits is to find out whether each of the eight individual signal paths of the bus work correctly. Further it is possible to find out whether a certain conductor of the bus is "jammed" to a one or zero, or whether a bit on a certain conductor affects the bits on the adjacent conductors, when the bit pattern formed by the test bits TB alternates regularly, e.g. in a sequence 0000-1111-0000-1111 or 0000 - 1010 - 1111 - 0101 (however, so that every possible bit pattern appear in its turn both in the first four bit positions and the second four bit positions).

The logical connection conveyed by the test bits within the network element (from the input section 4 to the output section 6 in the embodiment of figure 2) can be called a test channel or a pilot channel. It is possible to form several logically independent pilot channels by giving, in the microprocessor 8 controlling the operation of the network element, different settings to certain definitions affecting the signal transmission within the network element. Figure 4 shows an embodiment, which uses two pilot channels PILOT 1 and PILOT 2. In addition to these a so called error channel E_CNT is used in accordance with the invention to transmit the number of observed parity errors, the E_CNT forming a logical connection within the network element in order the transmit the bits representing the number of parity errors. In the embodiment of figure 4 there are in total eight parity error bits and test bits, so that they occupy the space of one byte (the byte H3 1, H3 or V3 in the figure). The bits of the PILOT channel and the E-CNT channel transmitting information belonging to certain consecutive VC frames are shown in the figure below each other, in the same way as in figure 3. A similar alternation of the bit positions used for different purposes to that of figure 3 is used in this embodiment.

A so called justification can be used when the transmission frame is formed, if the clock frequency of the formed frame is higher or lower than that clock frequency which is used to pack the payload in other places of the network. A negative justification comes into question in a case when the clock frequency of the frame to be formed is lower than the clock frequency which is used to pack the payload and when the shift buffer used for temporary storage of the transmit information threatens to overflow. Then bytes are taken from the payload and placed in the area usually reserved for the AU/TU pointers. In the embodiment of figure 4 the rows 8 and 15 correspond to a situation in which it was detected at the input section 4 of the network element that a negative justification was made in the frame in question. The detection is based on the examination of the AU/TU pointers in a way known per se. Then the parity error bits and test bits are not used in this frame, but the space (the byte H31, H3 or V3 in the figure 4) reserved for them is used to transmit the information DATA actually to be transmitted. In the embodiment of figure 4 the negative justification is made only in occasional frames corresponding to the rows 8 and 15. In the next frame, where no negative justification is made (on the rows 9 and 16) the use of parity error bits and test bits continues from that point in the sequence where it was left before the pause due to the negative justification. A positive justification in the frame has no effect on the use of the parity error and test bits.

In another preferred embodiment of the invention the calculated parity error information for a frame, in which a negative justification was made, is added to the parity error information for a next frame without negative justification. Thus all frames will be examined regarding the parity errors.

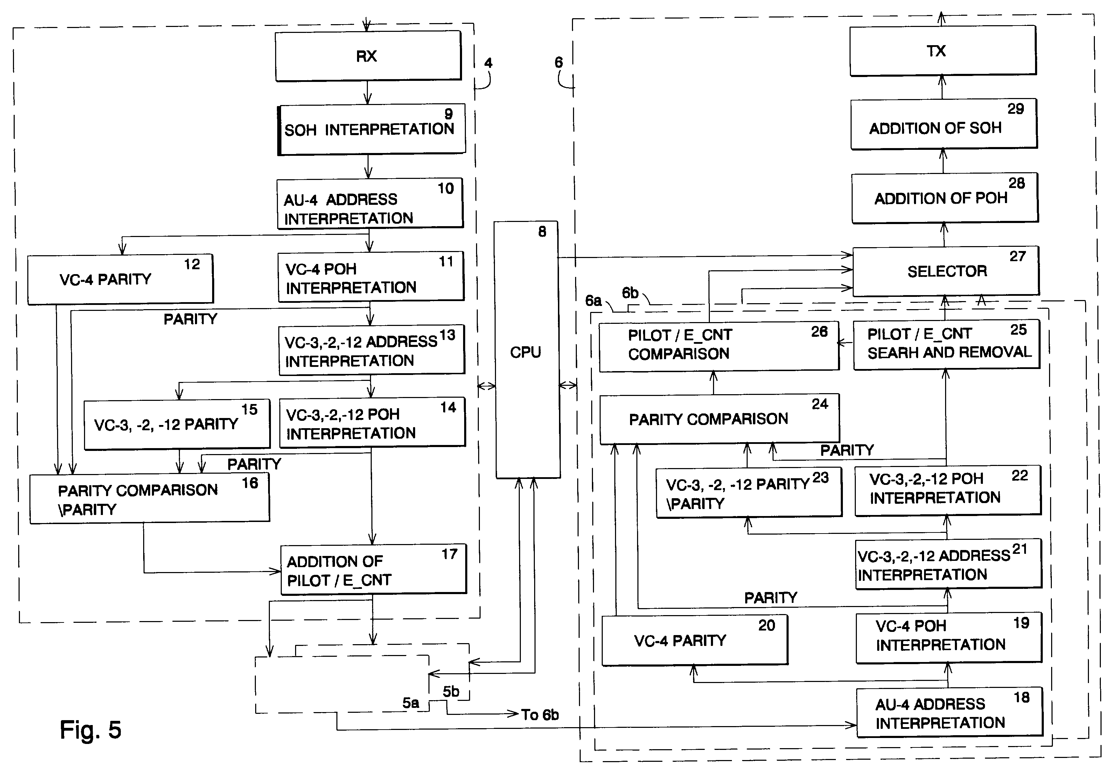

With reference to figure 5 the microprocessor 8 controlling the operation of the network element 1 supplies the contents of the pilot channels or the test bits both to the input section 4 and to the output section 6. The input section comprises a receiver RX whose input interface corresponds to the definitions presented in recommendations G.703 or G.957. There are dedicated function blocks 9 and 10 for the interpretation of the section overhead AU pointers. In connection with the interpretation of the AU pointers there is also examined whether negative justifications have been made in the frames. The block 11 interprets the path overhead of the VC-4 level and the block 12 calculates the parities relating to the VC-4 frames processed by the network element 1. Correspondingly, the blocks 13, 14 and 15 interpret the overheads and pointers and calculate the parities of the input information for lower hierarchical levels. The parity comparison block 16 compares the parity information arriving with the transmit information with the parity information calculated by the blocks 12 and 15, and determines the number of errors found. In the addition block 17 the bits E_CNT representing the number of parity errors and the test bits PILOT supplied by the microprocessor are added to those frames in which no negative justification was made.

The output section 6 comprises identical blocks 6a and 6b, which on the information supplied by the parallel switch blocks 5a and 5b perform substantially the same interpretation and calculation operations as in the blocks 10 to 16 in the input section (as an example there are shown the blocks 18 to 24 of the block 6a). The logic block 25 searches for the pilot channel part in the information supplied through the network element 1, which pilot channel shall be according to the test bit pattern supplied by the microprocessor, in order to check the test bits and the bits representing the number of parity errors. When the correct bit position is found the output section 6 monitors how the test bits and the parity error bits are mutually located according to the sequence shown in figure 4. The comparison block 26 compares the number of parity errors with the number indicated by the parity error bits and examines, whether the test bits were correctly transmitted. A notice of the interrupt type is given to the microprocessor 8, if there are errors in the test bits or in the number of parity errors. The selector 27 determines, either on the basis of instructions provided by the microprocessor 8, or during certain conditions independently (so called hardware decision), which of the blocks 5a or 5b is selected, or determines the path through which supplied information is accepted to be transmitted further. The blocks 28 and 29 can add information to the overhead parts of the information to be transmitted further. The last block of the output section 6 is the transmitter TX, whose interface conforms to the stipulations presented in the recommendations G.703 or G.957.

Individually for each frame the microprocessor 8 is able to prevent the search for test bits, for instance in a situation when a protection switching has been made in the network element during a certain frame (the signal path is changed from switch block 5a to switch block 5b), or in some other situation, in which the test bit interpretation will probably fail causing an unnecessary error alarm. On the basis of error indications from the output section 6 the microprocessor 8 decides whether the signal is switched to pass through the alternative switching element 5b. The alternative function is the above mentioned "hardware decision" within the output section 6, whereby the operation can be faster. In the preferred embodiment the microprocessor 8 stores the information about error situations and change-overs, and if required, supplies a message about them to the operator controlling the operation of the network element.

In certain special situations the network element according to a preferred embodiment of the invention operates slightly different from that described above. For instance in the transmission of current narrow band data transmission services the network element operates in the so called LOP mode (Lower Order Path), whereby the test bits are added to the transmit information, but parity changes in the frames are not observed. Then the bits representing parity changes are set to zero, which in normal operation represents a message that no parity error have been found. Even then the test bits can be used to examine the internal operation of the network element.

The method according to the invention can be applied on different hierarchy levels, depending on the task of the respective network element and on which hierarchy level information is processed within this element. While we above described addition and interpretation of the parity error bits and test bits only between the input and output sections of the network element, the method according to the invention can be also applied so that there are several adding and/or interpretation points within the network element. This provides a higher accuracy in observing errors and operation disturbances. The effective observation range between a certain addition point and the corresponding interpretation point can be consecutive with another effective observation range, within it or partly interleaved with it. Parity error bits and test bits added in a number of addition points can be interpreted in the same interpretation points, bits added at the same addition point can also be interpreted in a number of interpretation points. The addition points and the interpretation points can also be exchanged within the network element by means of software or operator actions.

The method according to the invention provides a rapid, effective and reliable observation of transmission errors occurring within a network element. With the method it is particularly possible to find out whether the observed errors have occurred within the network element in question or earlier along the transmission route. On the basis of information generated with the method the microprocessor controlling the operation of the network element can select to use the block operating best when the network element comprises redundant blocks. On the basis of information generated by the microprocessor the section of the network element requiring service can be located rapidly and reliably.

## Claims

1. A method for testing the operation of a network element (1) in a transmission network based on the synchronous digital hierarchy in which the transmit information is arranged in frames, **characterized** in that verification data is added to the transmit information in a certain first section (4) of said network element (1), whereby the verification data at least in part is formed on the basis of the contents of said frames, and that said verification data is read in certain second section (6) of said network element in order to find out whether the components between said first section (4) and said second section (6) operate correctly in said network element (1).

2. A method according to claim 1, **characterized** in that said verification data comprises a parity error part (PVB, E_CNT), which indicates whether parity errors in the transmit information have been detected in said first section (4).

3. A method according to claim 2, **characterized** in that said parity error part (PVB, E_CNT) comprises amount information, which indicates how many parity errors in the transmit information have been detected in said first section (4).

4. A method according to claim 2 or 3, **characterized** in that on the basis of said parity error part (PVB, E_CNT) said second section (6) examines whether the number of parity errors in the transmit information has changed between said first section (4) and said second section (6).

5. A method according to any previous claim, **characterized** in that said verification data comprises a test part (TB; PILOT1; PILOT2), which is a predetermined character string.

6. A method according to any previous claim, **characterized** in that said character string is varied according to a certain predetermined variation order.

7. A method according to any previous claim, **characterized** in that verification data parts according to said verification data are added on different hierarchy levels of said frame structure.

8. A method according to any previous claim, **characterized** in that said verification data is removed from the transmit information before the information is sent further from said network element (1).

9. A method according to any previous claim, **characterized** in that verification data parts according to said verification data are added to the transmit information at several points in said network element (1).

10. A method according to any previous claim, **characterized** in that the verification data added to the transmit information are interpreted at several points in said network element (1).

11. A transmission device (1) for the transmission of information in a transmission network based on the synchronous digital hierarchy, whereby the transmission device (1) comprises a first section (4), a second section (6) and means (5a, 5b) to transmit information between them, **characterized** in that said first section (4) comprises information generating means (12, 15, 16) to generate verification data on the basis of the contents of the transmit information which it received, and adding means (17) to add said verification data to the transmit information, and that said second section (6) comprises interpreting means (25, 26) to interpret said verification data in order to find out whether said means (5a, 5b) to transmit information between said first section (4) and said second section (6) operate correctly.

12. A transmission device (1) according to claim 11, **characterized** in that said first section (4) comprises first parity calculation means (12, 15) to calculate the parity data for the information it received and first comparison means (16) to compare the calculated parity data with the parity data contained in the received information, and adding means (17) to add data relating to the occurrence of errors detected during said comparison to said verification data, and that said second section (6) comprises second parity calculation means (20, 23) to calculate the parity data for the information it received and second comparison means (24) to compare the calculated parity data with the parity data contained in the received information and third comparison means (26) to compare the data representing to the occurrence of errors detected during said comparison with said verification data.
